Europäisches Patentamt

European Patent Office

Office européen des brevets

(11) Publication number: **0 250 605 B1**

# EUROPEAN PATENT SPECIFICATION

(45) Date of publication of patent specification: **24.07.91**   (51) Int. Cl.⁵: **B60C 9/08**, B60C 15/06

(21) Application number: **86106898.9**

(22) Date of filing: **21.05.86**

(54) **Pneumatic radial tire for passenger car.**

(43) Date of publication of application:
**07.01.88 Bulletin 88/01**

(45) Publication of the grant of the patent:
**24.07.91 Bulletin 91/30**

(84) Designated Contracting States:
**DE FR GB IT**

(56) References cited:
**FR-A- 2 244 634          FR-A- 2 512 748
US-A- 3 977 172          US-A- 4 019 551
US-A- 4 285 381          US-A- 4 326 576**

**CHEMIEFASERN/TEXTIL INDUSTRIE, vol. 24,
no. 2, February 1974, pages 97-101, Frankfurt,
DE; Dr. J.W. ROTHUIZEN: "KEVLAR - eine
neue Generation von Verstärkungsfasern für
Reifen und andere Gummierzeugnisse"**

(73) Proprietor: **THE YOKOHAMA RUBBER CO.,
LTD.
36-11, Shinbashi 5-chome Minato-ku
Tokyo, 105(JP)**

(72) Inventor: **Hanada, Ryoji
490, Tokunobu
Hiratsuka-shi Kanagawa-ken(JP)**
Inventor: **Morikawa, Tuneo
2216, Minamigaoka
Hadano-shi Kanagawa-ken(JP)**
Inventor: **Kabe, Kazuyuki
28-1, Minamihara 1
Hiratsuka-shi Kanagawa-ken(JP)**

(74) Representative: **Weber, Dieter, Dr. et al
Dr. Dieter Weber und Dipl.-Phys. Klaus Seif-
fert Patentanwälte Gustav-Freytag-Strasse
25 Postfach 6145
W-6200 Wiesbaden 1(DE)**

## Description

This invention relates to a tyre and wheel rim assembly for a passenger car comprising a pneumatic radial tire having improved durability at a turnup portion of its carcass layer.

Pneumatic radial tires for a passenger car generally use cords of organic fibers such as nylon fibers, polyester fibers, rayon fibers or the like as the cords of a carcass layer and includes two or more belt layers having a structure in which steel cords of one layer cross those of the other layers. Due to the existence of the belt layers, the pneumatic radial tires have improved wear resistance, high speed durability and maneuvering stability when compared with conventional bias tires. In addition, rolling resistance of the radial tires is reduced. In order to improve productivity and to reduce the tire weight, one-ply arrangement tends to be employed instead of two-ply arrangement for disposing the carcass layer.

In pneumatic radial tires having a tire size greater than 195/70 SR 14, however, it is difficult to employ the one-ply arrangement for the carcass layer by use of the organic fiber cords described above from the viewpoint of tire strength.

Therefore, it has been proposed recently to utilize aromatic polyamide fiber cords as the cords of the carcass layer of the pneumatic radial tires as disclosed in Japanese patent application Kokai - (= laying-open) publication No. 49-12030.

Aromatic polyamide fibers have by far higher a strength than conventional organic fiber cords. Therefore, when the aromatic polyamide fiber cords are used, the carcass layer which has heretofore required the two-ply arrangement can be formed by the one-ply arrangement so that productivity can be improved. However, since the aromatic polyamide fibers have high crystallinity due to their molecular structure, adhesion with covering rubber is low, and hence separation (peel of the cords from the rubber) is likely to occur at a turnup portion of the carcass layer when the aromatic polyamide fiber cords are used. A tyre and wheel rim assembly according to the preamble of claim 1 is known, e.g. from US-A-4326576, wherein the JIS hardness of the upper bead filler is at least 92.

It is an object of the present invention to provide a tyre and wheel rim assembly which can improve durability of a carcass layer using aromatic polyamide fiber cords, particularly durability of a turnup portion of the carcass layer.

In a tire and wheel rim assembly of the kind set forth, the object of the present invention described above can be accomplished by the features recited in claim 1

The above and other objects and features of the present invention will become more apparent from the following description to be taken in conjunction with the accompanying drawings.

Fig. 1 is a sectional view of a half portion of a pneumatic radial tire for a passenger car in a meridian direction in accordance with an embodiment of the present invention;

Figs. 2(A), (B) and (C) are each an enlarged view of principal portions of a tire bead; and

Fig. 3 is a diagram showing durability of various tires.

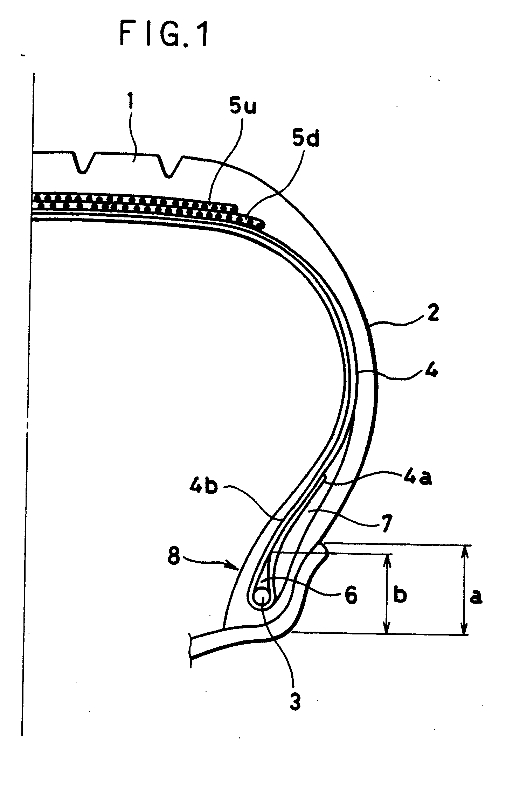

In Fig. 1, reference numeral 1 represents a tread, 2 is a pair of right and left sidewalls, and 4 is a carcass layer which is fitted between a pair of annular bead wires 3 and 3. A belt layer consisting of an upper belt layer 5u and a lower belt layer 5d is disposed in the tread 1 in such a manner as to encompass the outer periphery of the carcass layer 4.

Steel cords are primarily used as the cords of the belt layer but other cords such as aromatic polyamide fiber cords may also be used.

A belt cover layer may be disposed annularly outside the belt layer in the circumferential direction of a tire so as to further improve the high speed running performance.

Aromatic polyamide fiber cords are arranged in the carcass layer 4. The aromatic polyamide fiber cords used herein are obtained by twisting aromatic polyamide fibers having a tensile strength of at least 150 kg/mm$^2$ and a tensile elastic modulus of at least 3,000 kg/mm$^2$ in such a manner that a twist coefficient K of the formula below is within the range of $1,000 \leq K \leq 3,500$, to thereby obtain cords and then subjecting the resulting cords to bonding heat-treatment:

$$K = T \sqrt{D}$$

where

K : twist coefficient,

T : number of turns per 10 cm of cord,

D : total denier of cord.

In the present invention, each end portion of the carcass layer 4 is turned up around the annular bead wires 3 and around a lower bead filler 6 disposed on the bead wires 3 from the inside to the outside of the tire to thereby form a turnup portion 4a, which is then extended along the main body of the carcass layer 4b, and an upper bead filler 7 having a JIS hardness of from 75 to 95 is disposed outside the turnup portion 4a. The symbol a in Fig. 1 represents a rim flange height and b does the height of the lower bead filler 6. The structure of the bead portion 8 is specified in the manner described above for the following reasons.

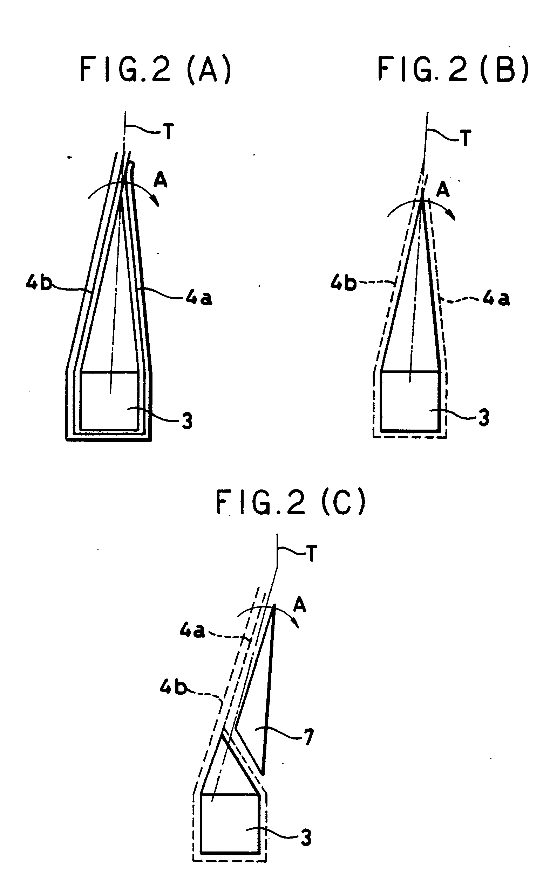

Figs. 2(A), 2(B) and 2(C) are enlarged views of principal portions of the tire bead. Fig. 2(A) shows a tire having a conventional bead structure which uses organic fiber cords such as polyester fiber cords, nylon fiber cords, rayon fiber cords or the like for the cords of the carcass layer. Fig. 2(B) shows a tire having a conventional bead structure which uses aromatic polyamide fiber cords for the cords of the carcass layer 4, and Fig. 2(C) shows a tire having a bead structure in accordance with the present invention which uses aromatic polyamide filter cords for the cords of the carcass layer 4.

When the tire touches the ground and undergoes deformation, the bead portion of the tire is bent from the inside to the outside of the tire as represented by an arrow A in Figs. 2(A), 2(B) and 2(C). Therefore, tensile force acts upon the inside of the tire while compressive force acts upon the outside. If the conventional bead structures such as those shown in Figs. 2(A) and 2(B) are employed, therefore, the neutral aids T of bending is positioned in between the main body 4b of the carcass layer and the turnup portion 4a as shown in the drawings and hence compressive force acts upon the turnup portion 4a. When the aromatic polyamide fiber cords having a low compressive fatigue resistance are used for the carcass layer [Fig. 2(C)], therefore, the cords of the turnup portion 4a undergo compressive fatigue breakdown due to the compressive force resulting from the deformation of the tire due to contact with the ground.

In contrast to the above, in the case of a bead structure as shown in Fig. 2(C), as in the tire according to the present invention, the neutral axis T of bending is located in the vicinity of a side surface, on the inner side of the tire, of the upper bead filler 7, so that substantially no compressive force is exerted on the turnup portion 4a. In the tire according to the invention, the turnup portion 4a is disposed to extend along the main body 4b of the carcass layer, and thereby it is made lying in the region of tensile force application, relative to the neutral aids T of bending, so that the generation of a separation and an accompanying cord breakage at an end portion of the turnup portion 4a can be suppressed.

However, if the upper bead filler 7 has a compression rigidity which is relatively limited, a satisfactory effect of preventing a separation at the end portion of the turnup portion 4a and thereby improving the durability of the carcass layer cannot be brought about only by way of making the arrangement shown in Fig. 2(C), namely by disposing the turnup portion 4a to extend along the main body 4b of the carcass layer and, in addition, incorporating the upper bead filler 7 outwardly of the turnup portion 4a. Thus, it is made a further requirement according to the present invention that the upper bead filler 7 should have a JIS hardness of 75 to 95. incorporating an upper bead filler 7 of which the JIS hardness is below 75. it is impossible to sufficiently improve the durability of the carcass layer, while an upper bead filler 7 having a JIS hardness above 95 tends to be so hard that not only it becomes difficult to produce a tire but also the resulting tire cannot exhibit a desirable driving comfort.

Further, to obtain a desirable steering stability of the tire, preferably the lower bead filler 6 should have a JIS hardness equal to or greater than the JIS hardness of the upper bead filler 7.

According to the invention, it is also required that the lower bead filler 6 has a height b, which satisfies the following relation to the rim flange height a:

b nun <a mm + 10 mm.

The height b of the lower bead filler 6 and the rim flange height a are measured with reference to the position corresponding to the location of the diameter of the rim seat.

If the height b of the lower bead filler 6 is greater than the rim flange height a by a difference of 10 nun or more (b mm ≥ a mm + 10 mm), it becomes difficult to arrange the turnup portion 4a in the region of tensile force application relative to the neutral aids T of bending, and it is then impossible to improve the durability of the carcass layer.

Now the effect of the present invention will be described in more detail with reference to some experimental examples.

Experimental Examples

A tire 1 of the invention, a comparative tire 1, a comparative tire 2 and a conventional tire 1, each having a tire size of 195/70 HR 14 and the specification described below, were experimentally produced.

(1) Invention tire 1

belt layer: 40 pcs/50 mm of steel cords 1 x 5 (0.25) were laminated in a bias arrangement at 20° in a circumferential direction of the tire.

carcass layer: 37 pcs/50 mm of aromatic polyamide fiber cords 1000 D/2 were arranged substantially at 90° in a circumferential direction of the tire.

bead structure: As depicted in Fig. 2(C).

JIS hardness of upper bead filler: 90.

K value of aromatic polyamide fiber cords: 3,000.

(2) Comparative tire 1

Although the belt layer and carcass layer were the same as the invention tire 1, the bead structure was as shown in Fig. 2(B).

## (3) Comparative tire 2

Although the material and construction were the same as the invention tire 1, the JIS hardness of the upper bead filler was 65.

## (4) Conventional tire 1

belt layer: The same as that of the invention tire 1.

carcass layer: 55 pcs/50 mm of polyester fiber cords 1,000 D/2 were laminated in two layers at substantially 90° in a circumferential direction of the tire.

bead structure: As depicted in Fig. 2(A).

These sample tires are subjected to indoor durability tests using a tester having a drum diameter of 1,707 mm. The test conditions were as follows:

rim: 5½JJ x 14, air pressure: 1.9 kg/cm²

speed: 80 km/hr, initial load: 525 kg.

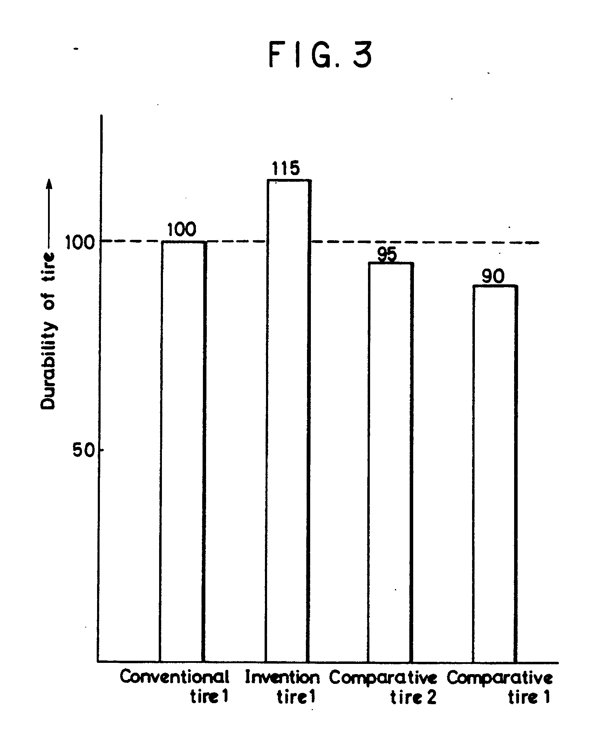

The sample tires were run until they were broken by increasing the load by 50 kg every 2 hours. The test results are shown in Fig. 3, wherein the durability of the conventional tire 1 is supposed to be 100 as an index.

It can be understood from Fig. 3 that the invention tire 1 which uses aromatic polyamide fiber cords for the cords of the carcass layer and has the bead structure shown in Fig. 2(C) exhibits an improvement in durability of 15% when compared with the conventional tire 1. The durability of the invention tire 1 was found to be also higher than the comparative tires 1 and 2.

As described above, in pneumatic radial tires for a passenger car of the type in which aromatic polyamide fiber cords are arranged for the carcass layer, the pneumatic radial tire for a passenger car in accordance with; the present invention has a construction wherein a turnup portion is extended along a carcass layer main body, an upper bead filler having a JIS hardness of from 75 to 95 is disposed outside the turnup portion and the height b of the lower bead filler 6 is smaller than the rim flange height a added by 10 nun (b mm < a mm + 10 mm). This construction can improve the tire durability, particularly the durability of the turnup portion of the carcass layer.

## Claims

**1.** A tyre and wheel rim assembly for a passenger car comprising a pneumatic radial tire having cords arranged for a carcass layer (4), the end portion of which carcass layer is turned up around an annular bead wire (3) and a lower bead filler (6) from the inside to the outside of the tire to form a turnup portion (4a) which is extended along the main body (4b) of said carcass layer, the tire further having an upper bead filler (7) disposed axially outside said turnup portion (4a) characterized in that said upper bead filler (7) has a JIS hardness of from 75 to 95, said cords are aromatic polyamide fiber cords, and the height b (mm) of said lower bead filler (6) relative to the height a (mm) of a rim flange upon which the tire is to be mounted satisfies the formula:

b mm < a mm + 10 mm

wherein a and b are each measured radially outwardly from the position corresponding to the diameter of the rim seat.

**2.** An assembly according to claim 1, wherein said aromatic polyamide fiber cords are obtained by twisting aromatic polyamide fibers having a tensile strength of at least 150 kg/mm² and a tensile elastic modulus of at least 3,000 kg/mm² in a manner such that a twist coefficient value K expressed by the following formula is in the range of 1,000 ≤ K ≤ 53,500 to obtain cords, and subjecting the resulting cords to bonding heat-treatment:

$$K = T \sqrt{D}$$

where

| | |
|---|---|
| K ≘ | twist coefficient, |
| T ≘ | number of turns per 10 cm of cord, |
| D ≘ | total denier of cord. |

**3.** An assembly according to claim 1, wherein the lower bead filler (6) below said upper bead filler (7) has a JIS hardness which is equal to, or higher than, that of said upper bead filler (7).

## Revendications

**1.** Assemblage d'un bandage de roulement et d'une jante de roue pour véhicule à passager, comprenant un bandage radial pneumatique avec des câbles arrangés pour former une couche de carcasse (4), la portion d'extrémité de cette couche de carcasse étant tournée autour d'un câble en collier annulaire (3) et d'un remplissage de collier inférieur (6) depuis l'intérieur vers l'extérieur du bandage afin de former une portion de rebroussement (4a) qui s'étend le long du corps principal (4b) de ladite couche de carcasse, le bandage comprenant en outre un remplissage de collier supérieur (7) disposé axialement à l'extérieur de ladite portion de rebroussement (4a), caractérisé en ce que ledit remplissage de collier supérieur (7) possède une dureté JIS comprise entre 75 et 95, lesdits câbles étant des câbles en fibre polyamide aromatique, et la hauteur b (mm) dudit remplissage de collier inférieur (6) par rapport à la hauteur a (mm) de l'épaulement de la jante contre lequel le bandage doit être monté satisfait à la formule :

b mm < a mm + 10 mm

suivant laquelle a et b sont mesurés radialement vers l'extérieur chacune depuis une position correspondant au diamètre du siège de jante.

2. Assemblage selon la revendication 1, dans lequel lesdits câbles en fibre polyamide aromatique sont obtenus par tressage de câbles en polyamide aromatique ayant une résistance à la tension d'au moins 150 kg/mm $^2$ et un module élastique à la tension d'au moins 3 000 kg/mm², de sorte que la valeur K du coefficient d'enroulement exprimée par la formule ci-après est compris dans une gamme entre 1 000 ≤ K ≤ 3 500 pour l'obtention des câbles, et en soumettant les câbles ainsi obtenus a un traitement thermique de liaison :

K = T √ D

où
- K ≙     coefficient d'enroulement,
- T ≙     nombres d'enroulement par 10 cm de câble.
- D ≙     denier total du câble

3. Assemblage selon la revendication 1, dans lequel le remplissage de collier inférieur (6) en dessous du remplissage de collier supérieur (7) présente une dureté JIS qui est égale ou supérieure à celle du remplissage de collier supérieur (7).

## Patentansprüche

1. Reifen- und Radfelgenaufbau für einen Personenwagen mit einem Druckluftradialreifen, dessen Corde für eine Karkassenschicht (4) angeordnet sind, wobei der Endabschnitt der Karkassenschicht um einen ringförmigen Wulstdraht (3) und einen unteren Wulstfüller (6) von der Innenseite zur Außenseite des Reifens herum nach oben gelegt ist, um einen hochgewendeten Abschnitt (4a) zu bilden, der sich entlang des Hauptteiles (4b) der Karkassenschicht erstreckt, wobei der Reifen weiterhin einen oberen Wulstfüller (7) aufweist, der in axialer Richtung außerhalb des hochgewendeten Abschnittes (4a) angeordnet ist, dadurch gekennzeichnet daß der obere Wulstfüller (7) eine JIS-Härte zwischen 75 und 95 hat, die Corde aromatische Polyamidfasercorde sind und die Höhe b (mm) des unteren Wulstfüllers (6) relativ zur Höhe a (mm) eines Felgenflansches, auf welchem der Reifen zu montieren ist, die Gleichung erfüllt:

b mm < a mm + 10 mm

wobei a und b jeweils in radialer Richtung nach außen gemessen werden von einer Position aus, die dem Durchmesser des Felgensitzes entspricht.

2. Aufbau nach Anspruch 1, wobei die aromatischen Polyamidfasercorde durch Verdrillen von aromatischen Polyamidfasern erhalten werden, die eine Zugfestigkeit von zumindest 150 kg/mm² und einen elastischen Zugspannungsmodul von zumindest 3000 kg/mm² haben, und zwar in der Weise, daß ein Verdrillungskoeffizientwert K im Bereich von 1000 ≤ K ≤ 3500 liegt, um Corde zu erhalten, und wobei die entstehenden Corde einer Wärmebehandlung zum Binden bzw. Abbinden ausgesetzt werden, wobei der Wert K aus der folgenden Formel ermittelt wird:

K = T√ D

wobei
- K ≙     Verdrillungskoeffizient,
- T ≙     Anzahl der Drehungen pro 10cm Cord,
- D ≙     Gesamtdenierzahl des Cordes.

3. Aufbau nach Anspruch 1, wobei der untere Wulstfüller (6) unter dem oberen Wulstfüller (7) eine JIS-Härte hat, die gleich der Härte oder größer als die Härte des oberen Wulstfüllers (7) ist.

# FIG.1

# FIG.2 (A)

# FIG.2 (B)

# FIG.2 (C)

# FIG. 3